# EUROPÄISCHE PATENTSCHRIFT

(11) **EP 2 783 084 B1**
(45) Veröffentlichungstag und Bekanntmachung des Hinweises auf die Patenterteilung: **08.02.2017**
(21) Anmeldenummer: 12790877.0
(22) Anmeldetag: 21.11.2012
(51) Int. Cl.: F01N 3/20, F02M 53/04

(54) **KÜHLEINRICHTUNG MIT DRAINAGEBOHRUNGEN FÜR EIN DOSIERVENTIL**
COOLING DEVICE WITH DRAIN OPENINGS FOR A DOSING VALVE
DISPOSITIF DE REFROIDISSEMENT AVEC OUVERTURES DE DRAINAGE POUR UNE SOUPAPE DE DOSAGE

(30) Priorität: 25.11.2011 DE 102011087085
(43) Veröffentlichungstag der Anmeldung: 01.10.2014
(73) Patentinhaber: Robert Bosch GmbH, 70442 Stuttgart (DE)
(72) Erfinder: KIONTKE, Martin, 71254 Ditzingen (DE); POHL, Stephan, 71701 Schwieberdingen (DE); KNITTEL, Achim, 71254 Ditzingen (DE)
(86) Internationale Anmeldenummer: PCT/EP2012/073166
(87) Internationale Veröffentlichungsnummer: WO 2013/076112

(56) Entgegenhaltungen:
- WO-A1-2013/068288
- WO-A1-2013/076028
- JP-A- 9 096 212
- JP-A- 2007 321 647
- JP-A- 2010 031 769

## Beschreibung

### Stand der Technik

DE 44 36 397 A1 bezieht sich auf eine Einrichtung zum Nachbehandeln von Abgasen. Gemäß dieser Lösung wird ein Reduktionsmittel in das dem Katalysator zugeführte Abgas eingegeben. Die Eingabe erfolgt dabei über ein elektrisch gesteuertes Dosierventil, das in einem gemeinsamen Gehäuse mit einem Steuerventil kombiniert ist. Das Steuerventil dient der gesteuerten Einbringung von zugeführter Druckluft, in der eine über das Dosierventil vorgelagerte Menge von Reduktionsmittel aufbereitet und intermittierend in das Abgas eingebracht wird. Dadurch können Harnstoffablagerungen und Verklebungen an Dosierventil und Steuerventil vermieden werden und es lässt sich eine optimale Aufbereitung des eingebrachten Reduktionsmittels erzielen.

US 2010 0313553 bezieht sich auf einen Injektor zur Abgasnachbehandlung, der eine Harnstoffwasserlösung zur Senkung von NOx-Emissionen in ein Abgas-System einbringt. Dabei ist das Einspritzende des Injektors von einem inneren Gehäuse und einem äußeren Gehäuse umgeben. Ein zwischen dem inneren Gehäuse und dem äußeren Gehäuse entstehender Spalt dient als Temperaturbarriere. Das äußere Gehäuse ist düsenförmig ausgebildet und erlaubt die Montage des Injektors mittels eines Flansches innerhalb eines Abgasrohres.

US 5,647,316 bezieht sich auf eine Injektoreinrichtung für eine Verbrennungskraftmaschine zur Einbringung eines druckbeaufschlagten Fluides in einen Zylinderraum. Der Injektor umfasst dabei ein erstes Ventil und ein zweites Ventil. Während das erste Ventil zur Einspritzung von Kraftstoff dient, dient das zweite Ventil zur Einbringung eines Hilfsstoffes, so beispielsweise Wasser oder eine Harnstoffwasserlösung. Mittels eines Ventilgliedes wird das zweite Ventil betätigt. Dieses Ventilglied wird hydraulisch über eine Hydraulikleitung angesteuert. Am Ventilglied befindet sich eine Drainageleitung, mit der überschüssige Hydraulikflüssigkeit abgeleitet und einem Behälter zugeführt werden kann.

DE 10 2009 047 375 A1 bezieht sich auf ein Dosiermodul mit Flüssigkeitskühlung. Dort wird eine Vorrichtung zur Kühlung eines Dosiermoduls offenbart, insbesondere zum Eindosieren eines Reduktionsmittels in den Abgastrakt einer Verbrennungskraftmaschine. Dem Dosiermodul ist eine Kühlrichtung zugeordnet, die von einer Kühlflüssigkeit durchströmt ist. Eine Mantelfläche des Dosiermoduls ist von einem Kühlkörper umschlossen, der von einer Kühlflüssigkeit durchströmt ist.

Die Druckschrift JP 9 096212 A offenbart ein Dosiermodul zum Einbringen eines Stoffes in den Abgastrakt eines Dieselmotors mit einem Kühlkörper, welcher von Kühlwasser durchströmt ist.

Auch aus der Druckschrift JP 2010 031 769 A ist ein Dosiermodul zum Einbringen eines Stoffes in den Abgastrakt eines Verbrennungsmotors bekannt, welches mittels Kühlwasser kühlbar ist.

Aus der Druckschrift JP 2007 321 647 A geht ein Dosiermodul zum Einbringen eines Stoffes in den Abgastrakt eines Verbrennungsmotors mit einer Kühlkammer hervor, welche von Kühlwasser durchflossen ist.

Aus der WO 2013/076028 A1, welche Stand der Technik nach Artikel 54 (3) EPÜ darstellt, ist ein Dosiermodul zum Eindosieren eines Reduktionsmittels in den Abgastrakt einer Verbrennungsmaschine bekannt. Das Dosiermodul umfasst ein Dosierventil, das von einer gekühlten Fläche umschlossen ist, die von einem mehrteilig ausgebildeten Kühlkörper umschlossen ist.

Aus der WO 2013/068288 A1, welche ebenfalls Stand der Technik nach Artikel 54 (3) EPÜ darstellt, ist auch ein Dosiermodul zum Eindosieren eines Reduktionsmittels in den Abgastrakt einer Verbrennungsmaschine bekannt. Das Dosiermodul umfasst ein Dosierventil, das von einer gekühlten Fläche umschlossen ist, die von einem mehrteilig ausgebildeten Kühlkörper umschlossen ist.

Ein Nachteil bekannter aktiver Kühl-Lösungen ist die fehlende Kühlwirkung im oberen Bereich, insbesondere im elektrischen Kontaktierungsbereich eines Einspritzventils des Dosiermoduls. Dadurch fehlt es an der Möglichkeit, das Dosiermodul bei einem Umgebungstemperaturniveau oberhalb von 160°C einzusetzen. Die elektrische Steckerverbindung und die Spule des Einspritzventiles können bei einem Temperaturniveau, welches oberhalb 160°C liegt, Schaden nehmen.

### Darstellung der Erfindung

Erfindungsgemäß wird vorgeschlagen, bei einem Dosiermodul nach Anspruch 1, insbesondere zum Einbringen eines Betriebs-/Hilfsstoffes, wie beispielsweise ein Reduktionsmittel in den Abgastrakt einer Verbrennungskraftmaschine, das ein Dosierventil umfasst, welches von einer gekühlten Fläche umgeben ist, die gekühlte Fläche mit einem Kühlkörper zu umgeben, der eine Kühlung des gesamten Dosiermoduls ermöglicht. Dabei umfasst der Kühlkörper einen verdrehbaren Flansch. Durch Anordnung mindestens einer Drainageöffnung ist gewährleistet, dass eine Sumpfbildung durch sich ablagernde Flüssigkeitsreste in einem Teil des mehrteilig ausgebildeten Kühlkörpers, welcher als Kompletteinhausung das Dosierventil umgibt, minimiert und im Idealfall völlig ausgeschlossen ist.

In vorteilhafter Weise können die Drainageöffnungen, beispielsweise in einer 90°-Teilung oder auch in einer 120°-Teilung an einem Teil, beispielsweise an einem ringförmig ausgebildeten Kragen eines topfförmigen Einsatzes ausgebildet sein. Insbesondere dann, wenn die rinnenförmigen Vertiefungen in der Ringfläche des topfförmigen Einsatzes des mehrteilig ausgebildeten Kühlkörpers in radiale Richtung verlaufen, ist sichergestellt, dass ein Abtransport der Flüssigkeit durch radiales Gefälle der rinnenförmigen Vertiefungen von innen nach außen noch begünstigt werden kann.

### Vorteile der Erfindung

Durch die erfindungsgemäß vorgeschlagene Lösung des Vorsehens von Drainageöffnungen, seien sie in 90°-Teilung, seien sie in 120°-Teilung, kann bei einem mehrteilig ausgebildeten Kühlkörper eine Sumpfbildung in diesem vermieden werden. Eine Sumpfbildung kann einerseits zu Korrosionserscheinungen führen, andererseits können neben Korrosionserscheinungen am Kühlkörper auch elektrische Kurzschlüsse an den elektrisch betätigten Komponenten des Dosiermoduls, insbesondere im Bereich des Steckerkontaktes auftreten, sodass die Funktionsfähigkeit des Dosiermoduls nicht in allen Betriebsphasen, insbesondere bei Watfahrten und dergleichen, gewährleistet werden kann.

Durch die erfindungsgemäß vorgeschlagene Lösung ist ein Abtransport von Flüssigkeit, sei es eingedrungenes Wasser, sei es Kondenswasser, aus dem Inneren des mehrteilig ausgebildeten Kühlkörpers gewährleistet.

### Kurze Beschreibung der Zeichnungen

Anhand der Zeichnung wird die Erfindung nachstehend eingehender beschrieben.

Es zeigt:
Figur 1 eine perspektivische Draufsicht eines Dosiermoduls, welches von einer Kompletteinhausung in Gestalt eines mehrteilig ausgebildeten Kühlkörpers umgeben ist,
Figur 2 einen Schnitt durch das in Figur 1 dargestellte Dosiermodul, und
Figur 3 eine perspektivische Draufsicht auf das Dosiermodul bei entfernter Mittelschale,
Figur 4 eine Darstellung von rinnenförmigen Vertiefungen, die sich an einem ringförmig ausgebildeten Kragen mit Gefälle von radial innen nach radial außen erstrecken,
Figur 5 eine perspektivische Darstellung des Dosiermoduls mit in einer 90°-Teilung angeordneten rinnenförmigen Vertiefungen und
Figur 6 eine Darstellung des Kühlfluidstromes durch den unteren Bereich des Dosiermoduls.

### Ausführungsvarianten

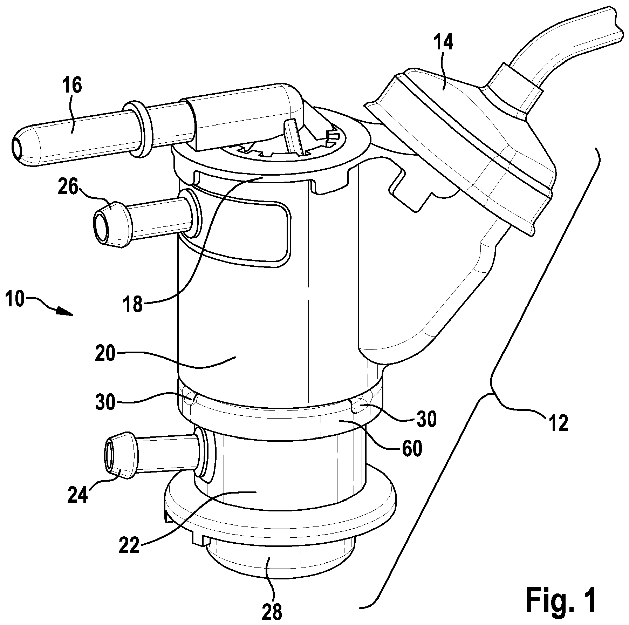

Figur 1 zeigt eine perspektivische Ansicht eines von einer Einhausung umgebenen Dosiermoduls, wobei die Einhausung aus mehreren Bauteilen gebildet ist.

Figur 1 zeigt, dass ein Dosiermodul 10 eine Einhausung 12 umfasst. Ein in Figur 1 nicht dargestellter, im Inneren des Dosiermoduls 10 liegender elektrischer Kontakt ist von einer Steckerabdeckung 14 umschlossen und nach außen gegen Spritzwasser abgedichtet. Des Weiteren umfasst die Einhausung 12 eine Oberschale 18, in der sich ein abgewinkelt ausgebildeter Reduktionsmittelzulauf 16 befindet. Unterhalb der Oberschale 18 befindet sich eine Mittelschale 20, unter der wiederum ein verdrehbarer Flansch 22 der Einhausung 12 des Dosiermoduls 10 angeordnet ist.

Wie des Weiteren aus der Darstellung gemäß Figur 1 hervorgeht, ist in den verdrehbaren Flansch 22 ein Innenteil 28 eingelassen. Seitlich an der Mantelfläche der Mittelschale 20 beziehungsweise des verdrehbaren Flansches 22 befindet sich ein Kühlfluidzulauf 24 sowie ein Kühlfluidablauf 26. Über den Kühlfluidzulauf 24 tritt Kühlfluid, welches beispielsweise in einer Verbrennungskraftmaschine zirkuliert, in den verdrehbaren Flansch 22 der Einhausung 12 ein, und durch den Kühlfluidablauf 26, der sich seitlich an der Mantelfläche der Mittelschale 20 befindet, wieder aus. Das Kühlfluid transportiert Wärme aus dem Dosiermodul 10 ab und gewährleistet, dass je nach Temperaturniveau, eine Kühlung des Dosiermoduls 10 und damit eine Aufrechterhaltung der Funktionsfähigkeit desselben bei einem Temperaturniveau von etwa 120°C oder auch darüber gewährleistet werden kann.

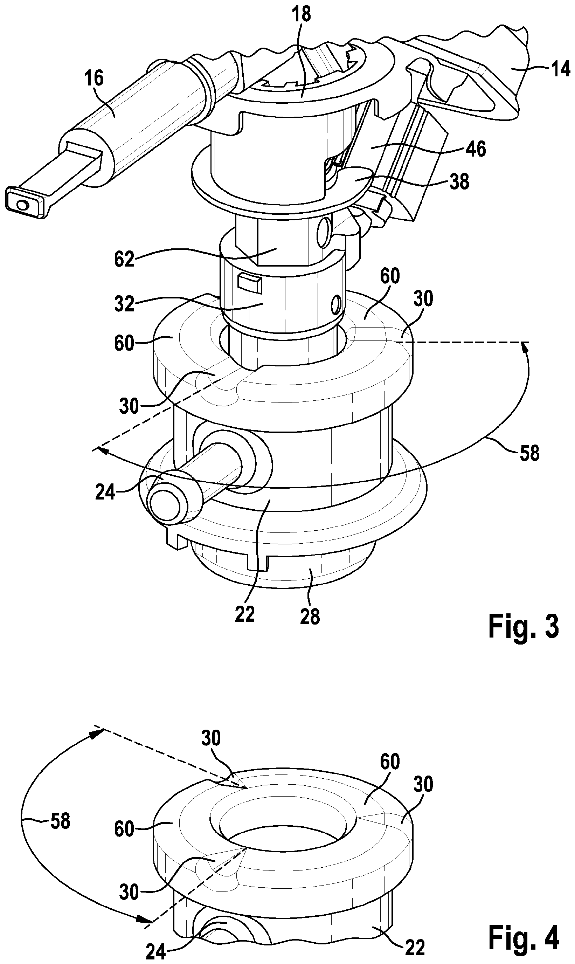

Aus der Darstellung gemäß Figur 1 lässt sich entnehmen, dass Drainageöffnungen 30 in Form von rinnenförmigen Vertiefungen entlang eines ringförmig ausgebildeten Kragens 60 des verdrehbaren Flansches 22 ausgebildet sein können, vergleiche detailliertere Darstellungen gemäß Fig. 3.

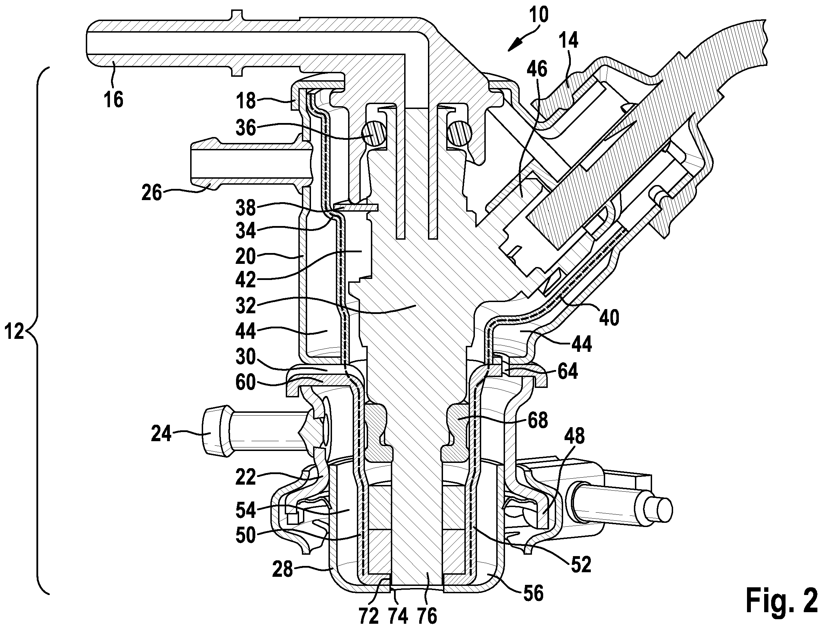

Figur 2 zeigt eine Schnittdarstellung durch das Dosiermodul gemäß der Darstellung in Figur 1 , dessen Einhausung mehrteilig ausgebildet ist.

Aus der Schnittdarstellung gemäß Figur 2 geht hervor, dass die Einhausung 12 die Oberschale 18 samt gewinkelt ausgebildetem Reduktionsmittelzulauf 16 umfasst. Die Oberschale 18 befindet sich oberhalb der Mittelschale 20 und deckt diese beispielsweise deckeiförmig ab. Die Mittelschale 20 ihrerseits umschließt eine Mantelfläche 34, d.h. eine zu kühlende Fläche des Dosiermoduls 10. Unterhalb der Mittelschale 20 befindet sich der verdrehbare Flansch 22, der seinerseits ein Innenteil 28 aufnimmt, welches das Ende eines Dosierventils 32 umschließt, über welches im Betrieb des Dosiermoduls 10 der Betriebs- / Hilfsstoff, insbesondere das Reduktionsmittel, in den Abgastrakt der Verbrennungskraftmaschine eingebracht wird.

Der Schnittdarstellung gemäß Figur 2 ist zu entnehmen, dass der Reduktionsmittelzulauf 16 sich durch die Oberschale 18 erstreckt und an der oberen Stirnseite in das Dosierventil 32 übergeht. Die Oberschale 18 ist mittels eines Dichtringes 36 gegen das Dosierventil 32 abgedichtet. Durch das Innere des hier nicht näher dargestellten Dosierventils 32 strömt der Betriebs-/ Hilfsstoff, insbesondere das Reduktionsmittel, dem"heißen" Teil des Dosierventils 32 zu, in dem ein Einspritzventil aufgenommen ist, über welches der Betriebs-/Hilfsstoff in den hier nicht näher dargestellten Abgastrakt einer Verbrennungskraftmaschine eingespritzt wird.

Wenn gleich in den Darstellungen gemäß der Figuren 1 und 2 der Reduktionsmittelzulauf 16 gewinkelt ausgebildet ist und in einer Ebene bezüglich des Kühlfluidzulaufes 24 sowie des Kühlfluidablaufes 26 orientiert ist, besteht die Möglichkeit, je nach Einbauverhältnissen, den Reduktionsmittelzulauf 16 in einer horizontalen Ebene in beliebigen 360° umfassenden Positionen an der Oberschale 18 anzuordnen. Dies ist abhängig von dem zur Verfügung stehenden Einbauraum, der Länge der Verbindungsschläuche oder Verbindungsleitungen -sowie weiterer Einbauparameter.

Das Dosierventil 32 ist gemäß der Schnittdarstellung in Figur 2 von einer gekühlten Fläche 34 umschlossen. Die unterhalb der Oberschale 18 angeordnete Mittelschale 20 enthält einerseits einen Kühlflüssigkeit aufnehmenden Hohlraum 42 und andererseits einen Hohlraum 44, der nicht mit Kühlflüssigkeit in Berührung gerät, d.h. im vorliegenden Zusammenhang als trocken bezeichnet werden kann.

Im Hohlraum 44 befindet sich ein elektrischer Steckkontakt 46, der mit der bereits im Zusammenhang mit Figur 1 erwähnten Steckerabdeckung 14 gegen Spritzwasser sowie Verschmutzung geschützt ist.

Figur 2 zeigt, dass sich innenliegend in Bezug auf die gekühlte Fläche 34 des Dosiermoduls 10, ein Trennring 38 erstreckt. Außenseitig begrenzt die gekühlte Fläche 34 des Dosiermoduls 10 mit der Innenseite der Mittelschale 20 einen das Kühlfluid aufnehmenden Hohlraum 42. Dieser erstreckt sich in Umfangsrichtung um das Dosierventil 32. Teil dieses Hohlraums 42 ist auch ein Hohlraumteil, der durch eine Trennwand 40 vom radial innenliegenden Hohlraum 44, der nicht mit Kühlflüssigkeit in Berührung ist, getrennt ist.

Der verdrehbare Flansch 22 umfasst den bereits erwähnten Kühlfluidzulauf 24, der sich seitlich in radiale Richtung, ausgehend von der Mantelfläche des verdrehbaren Flansches 22 aus erstreckt. Über den Kühlfluidzulauf 24 strömt Kühlfluid dem Innenteil 28 zu und gelangt in dessen Hohlraum 56. Von dort strömt das zulaufende Kühlfluid über eine Übergabeöffnung 64 in den Hohlraum 42 der Mittelschale 20 über. Sobald das Kühlfluid über die mindestens eine Übergabeöffnung 64 vom Hohlraum 56 des Innenteiles 28 in den Hohlraum 44, der durch die Mittelschale 20 gebildet ist, überströmt, wird dieser Bereich des Dosierventils 32 durch die Benetzung des Kühlfluides der gekühlten Fläche 34 bzw. der Trennwand 40 gekühlt. Aus dem Hohlraum 44, der innerhalb der Mittelschale 20 liegt, strömt das dann aufgrund seiner Erwärmung eine höhere Temperatur aufweisende Kühlfluid über den mindestens einen Kühlfluidablauf 26, beispielsweise wieder in den Kühlfluidkreislauf einer Verbrennungskraftmaschine zurück oder in einen separaten Kühlfluidkreislauf.

Aus der Schnittdarstellung gemäß Figur 2 geht hervor, dass eine Sumpfbildung im unteren Bereich eines Innenraumes 42 zwischen den gekühlten Flächen 34 bzw. der Trennwand 40 dadurch vermieden wird, dass am unteren Ende des Innenraumes dieser in mindestens eine als rinnenförmige Vertiefung in einem ringförmig ausgebildeten Kragen 60 eingeprägte oder anders gefertigte Drainageöffnung 30 mündet. Idealerweise weist diese mindestens eine als Drainageöffnung 30 fungierende rinnenförmige Vertiefung ein Gefälle von radial innen nach radial außen auf, so dass Flüssigkeit aus dem Innenraum 42 abfließen kann.

Im rechten Teil der Figur 2 ist eine weitere im ringförmig ausgebildeten Kragen 60 des topfförmigen Einsatzes 50 als rinnenförmige Vertiefung ausgebildete Drainageöffnung 30 nicht dargestellt, da sie nicht in der Schnittebene gemäß Figur 2 liegt.

Aus der Darstellung gemäß Figur 2 geht des Weiteren hervor, dass der untere sich verjüngende Bereich des Dosierventils 32, der sich in Richtung einer Ventilspitze 76, durch einen Stützring 68 im topfförmigen Einsatz 50 abgestützt bzw. zentriert ist. Die der höchsten thermischen Beanspruchung ausgesetzte Ventilspitze 76 erstreckt sich durch eine erste Öffnung 72, die im topfförmigen Einsatz 50 ausgebildet ist in eine weitere, zweite Öffnung 74, die sich an der Bodenfläche des Innenteiles 28 befindet. In Bezug auf das Dosiermodul 10 am weitesten außenliegenden zweiten Öffnung 74, streicht der in Figur 2 nicht dargestellte Abgasstrom im Abgastrakt einer Verbrennungskraftmaschine vorbei, so dass die Ventilspitze 76 den Temperaturen der Abgasströmung nicht unmittelbar ausgesetzt ist. Die Temperatur der Abgasströmung liegt typischerweise in einem Temperaturbereich je nach Betriebstemperatur der Verbrennungskraftmaschine in der Größenordnung zwischen 200°C und 750°C.

Der Darstellung gemäß Figur 2 ist zu entnehmen, dass der topfförmige Einsatz 50 einen ringförmig ausgebildeten Kragen 60 umfasst, in den einzelne rinnenförmige Vertiefungen, welche die Drainageöffnungen 30 bilden, eingelassen sind. Des Weiteren ist der Figur 2 zu entnehmen, dass zwischen dem topfförmigen Einsatz 50-innenliegend - und der Innenwand des Innenteiles 28 ein Leitblech angeordnet sein kann.

Mit Position 30 ist auf der linken Seite in Figur 2 oberhalb des Kühlfluidzulaufes 24 eine sich radial erstreckende rinnenförmige Vertiefung bezeichnet, die eine Drainageöffnung 30 bildet und im ringförmig ausgebildeten Kragen 60 angeordnet ist.

Schließlich lässt sich Figur 2 entnehmen, dass der verdrehbare Flansch 22 der die Oberschale 18 und die Mittelschale 20 umfassenden Einhausung 12 über einen Spannring 48 verfügt, mit welchem der mehrteilig ausgebildete Kühlkörper 18, 20, 22, der die Einhausung 12 darstellt, am hier nicht näher dargestellten Abgastrakt einer Verbrennungskraftmaschine befestigt wird.

Aufgrund des Umstandes, dass das Kühlfluid über den Kühlfluidzulauf 24 in den verdrehbaren Flansch 22 zuerst eintritt, kann ein signifikanter Kühleffekt an dem Ende des Dosierventils 32 des Dosiermoduls 10 erreicht werden, an dem im Betrieb des Dosiermoduls 10 die höchsten Betriebstemperaturen auftreten - dies bedeutet im Bereich der Ventilspitze 76 des Dosierventils 32 - ohne jedoch eine Kühlung des Dosiermoduls 10 im obenliegenden Bereich, d.h. Bereich des elektrischen Steckkontaktes 46 zu vernachlässigen. Durch die erfindungsgemäß vorgeschlagene Lösung ist eine Kühlung sämtlicher temperaturempfindlicher Bereiche des Dosiermoduls 10 möglich.

Figur 3 zeigt eine perspektivische Draufsicht auf einen ringförmig ausgebildeten Kragen, der am topfförmigen Einsatz des mehrteilig ausgebildeten Kühlkörpers ausgeführt ist.

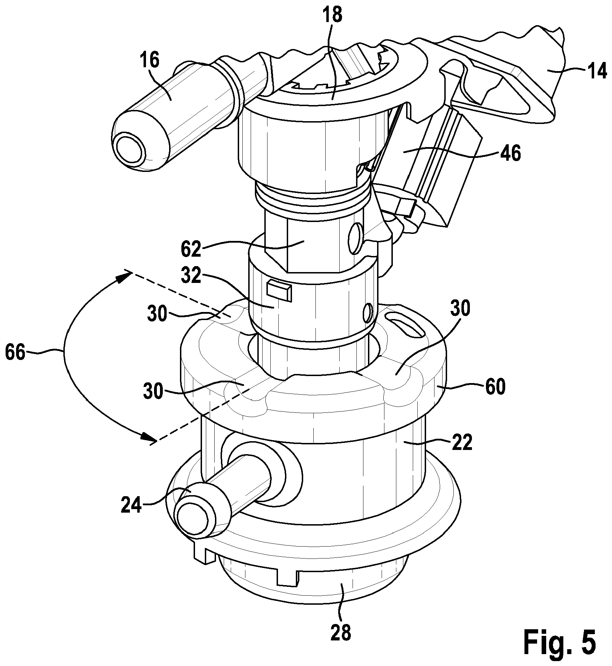

Aus Gründen der besseren Darstellbarkeit ist in der perspektivischen Ansicht gemäß Figur 3 die Mittelschale 20 der Einhausung 12 sowie die gekühlte Fläche 34 des Dosiermodule s 10 nicht dargestellt. Aus diesem Grunde lässt sich in Figur 3 ein Sechskant 62, der am Dosierventil 32 ausgebildet ist, erkennen. Das Dosierventil 32 ist, wie in Figur 3 dargestellt, von einem ringförmig ausgebildeten Kragen 60 umschlossen, in dem beispielsweise in einer 120°-Teilung (vergleiche Position 58) einzelne rinnenförmige Vertiefungen, die Drainageöffnungen 30 darstellen, ausgebildet sind. In der Ausführungsvariante der Drainageöffnungen 30 gemäß Figur 3 sind diese in den ringförmig ausgebildeten Kragen 60 in 120°-Teilung 58 ausgebildet, könnten jedoch auch in einer 90°-Teilung (vergleiche Position 66 gemäß Figur 5) oder in einer anderen Teilung ausgeführt werden. Die die Drainageöffnungen 30 darstellenden rinnenförmigen Vertiefungen können in der kragenförmig ausgebildeten Fläche 60 des topfförmigen Einsatzes 50 auch mit Gefälle von radial innen nach radial außen verlaufen, wie am Beispiel der Figur 4 dargestellt ist.

Unter Rückgriff auf Figur 2, die eine Schnittdarstellung des Dosiermoduls 10 darstellt, verlaufen unter der Mittelschale 20 beispielsweise in 120°-Teilung 58 angeordnete rinnenförmige Vertiefungen 64 in der kragenförmig ausgebildeten Fläche 60, so dass Flüssigkeit unter Vermeidung einer Sumpfbildung aus der Mittelschale 20, in radiale Richtung von innen nach außen abfließen kann. So ist sichergestellt, dass aus dem Innenraum 42, der durch den Trennring 38, die Innenseite der gekühlten Fläche 34 sowie die Außenseite des Dosierventils 32 gebildet ist, eventuell vorhandene Flüssigkeit aufgrund der Schwerkraftwirkung in Richtung nach unten in die in dem ringförmig ausgebildeten Kragen 60 ausgebildeten Drainageöffnungen 30 - beispielsweise als eingeprägte rinnenförmige Vertiefungen ausgebildet - abfließen kann, so dass dem Auftreten von Korrosion wirksam entgegengewirkt ist.

Der perspektivischen Draufsicht gemäß Figur 3 ist zu entnehmen, dass sich die kragenförmig ausgebildete Fläche 60 am oberen Ende des topfförmigen Einsatzes 50 befindet und in dieser Ausführungsvariante die Mantelfläche des verdrehbaren Flansches 22 bündig umgreift. In der Mantelfläche des verdrehbaren Flansches 22 befindet sich der Kühlfluidzulauf 24. Des Weiteren sind Teile der Oberschale 18 und des Reduktionsmittelzulaufs 16 zu erkennen, ebenso wie der elektrische Steckkontakt 36 auf der dem Kühlfluidablauf 26 gegenüberliegenden Seite der Oberschale 18. Des Weiteren ist in Figur 3 der in Figur 2 nur teilweise dargestellte Trennring 38 zu entnehmen, der den Innenraum 42 zwischen dem Dosierventil 32 und der Innenseite der gekühlten Fläche 34 nach oben begrenzt.

Figur 4 ist eine Ausführungsmöglichkeit der als rinnenförmigen Vertiefungen ausgebildeten Drainageöffnungen zu entnehmen.

Aus der Darstellung gemäß Figur 4 geht hervor, dass in der oberen Planfläche des ringförmig ausgebildeten Kragens 60 des topfförmigen Einsatzes 50 in 120°-Teilung 58 angeordnete Drainageöffnungen 30 verlaufen. Diese Drainageöffnungen sind in die Planfläche des ringförmig ausgebildeten Kragens 60 beispielsweise eingeprägt oder auf spanabhebendem Wege gefertigt. Wie der perspektivischen Ansicht gemäß Figur 4 zu entnehmen ist, weisen in dieser vorteilhaften Ausführungsvariante die als rinnenförmige Vertiefungen ausgebildeten Drainageöffnungen 30 ein Gefälle von innen nach außen auf. Aufgrund der Neigung, die die Drainageöffnungen 30 von radial nach innen nach radial außen aufweisen, ist sichergestellt, dass aus dem Innenraum 42 austretende Flüssigkeit aufgrund der Schwerkraft nach außen abtropft und eine Sumpfbildung im Inneren des Dosiermoduls 10 ausgeschlossen ist. Aus der Darstellung gemäß Figur 4 geht hervor, dass in Anlehnung an die Figuren 1 und 2 unterhalb des ringförmig ausgebildeten Kragens 60 der verdrehbare Flansch 22 angeordnet ist, von dem aus sich der in Figur 4 teilweise angedeutete Kühlfluidzulauf 24 radial seitlich erstreckt.

Aus Figur 4 geht hervor, dass die Geometrie der als rinnenförmige Vertiefungen ausgebildeten Drainageöffnungen 30 ein trichterförmiges Aussehen aufweisen und sich in radiale Richtung gesehen von innen nach außen kontinuierlich erweitern. Der Neigungswinkel, in dem die als rinnenförmige Vertiefungen ausgebildeten Drainageöffnungen 30 im ringförmig ausgebildeten Kragen 60 verlaufen, kann in fertigungstechnischer Hinsicht optimiert werden. Es besteht die Möglichkeit, die als rinnenförmige Vertiefungen ausgebildeten Drainageöffnungen 30 in den ringförmig ausgebildeten Kragen 60 im Wege der Umformtechnik beispielsweise einzuprägen, oder die Drainageöffnungen 30 auch spanabhebend zu fertigen. Dies hängt von den fertigungstechnischen Gegebenheiten ab.

Figur 5 zeigt eine weitere Ausführungsvariante des erfindungsgemäß vorgeschlagenen Dosiermoduls.

Aus Gründen der besseren Darstellbarkeit ist in der Darstellung gemäß Figur 5 analog zur Darstellung gemäß Figur 3 die Mittelschale 20 entfernt, so dass eine bessere Ansicht der Planfläche des ringförmig ausgebildeten Kragens 60 erreicht werden kann.

Aus Figur 5 geht hervor, dass in dieser Ausführungsvariante im ringförmig ausgebildeten Kragen 60 in einer 90°-Teilung 66 vier Drainageöffnungen 30 verlaufen. Die einzelnen Drainageöffnungen 30 sind auch in diesem Falle als in den ringförmig ausgebildeten Kragen 60 eingeprägte rinnenförmige Vertiefungen ausgebildet. In Abwandlung zur Darstellung der 90°-Teilung 66 angeordneten Drainageöffnungen 30, können diese auch in radialer Richtung von innen nach außen verlaufendes Gefälle aufweisen, um den Abtransport einer Flüssigkeit zu erleichtern. In Figur 5 ist die 90°-Teilung 66, in der die einzelnen Drainageöffnungen im ringförmig ausgebildeten Kragen 60 relativ zueinander orientiert sind, durch Bezugszeichen 66 kenntlich gemacht. Unterhalb des ringförmig ausgebildeten Kragens 60 ist die Mantelfläche des verdrehbaren Flansches 22 zu erkennen, an der in radiale Richtung mindestens ein Kühlfluidzulauf 24 ausgebildet ist. Unterhalb des verdrehbaren Flansches 22 ist das Innenteil 28, das sich am unteren Ende des Dosiermoduls 10 befindet, zu erkennen.

Figur 5 zeigt des Weiteren, dass in dieser Ausführungsvariante der Reduktionsmittelzulauf 16 und der mindestens eine Kühlfluidzulauf 24 am verdrehbaren Flansch 22 in einer in vertikale Richtung sich erstreckende gedachte Ebene übereinander liegen. Hier sind selbstverständlich auch andere Geometrien möglich, dies hängt von den jeweiligen Einbauverhältnissen des Dosiermoduls 10 dar, sei es im Motorraum eines Fahrzeugs oder sei es in der Bodengruppe eines Fahrzeugs in der Nähe des Abgastraktes einer Verbrennungskraftmaschine montiert.

Bezugszeichen 62 bezeichnet einen Sechskant, der am Dosierventil 32 ausgeführt ist, Position 46 einen seitlich vom Dosierventil 32 abgehenden elektrischen Steckkontakt. Oberhalb des Steckkontaktes 46 befindet sich eine Steckerabdeckung 14. Der seitlich als gewinkelter Abgang ausgebildete Reduktionsmittelzulauf 16 ist an einer Oberschale 18 angespritzt, bei der es sich in der Regel um ein als Kunststoffspritzgussbauteil gefertigtes Bauteil handelt.

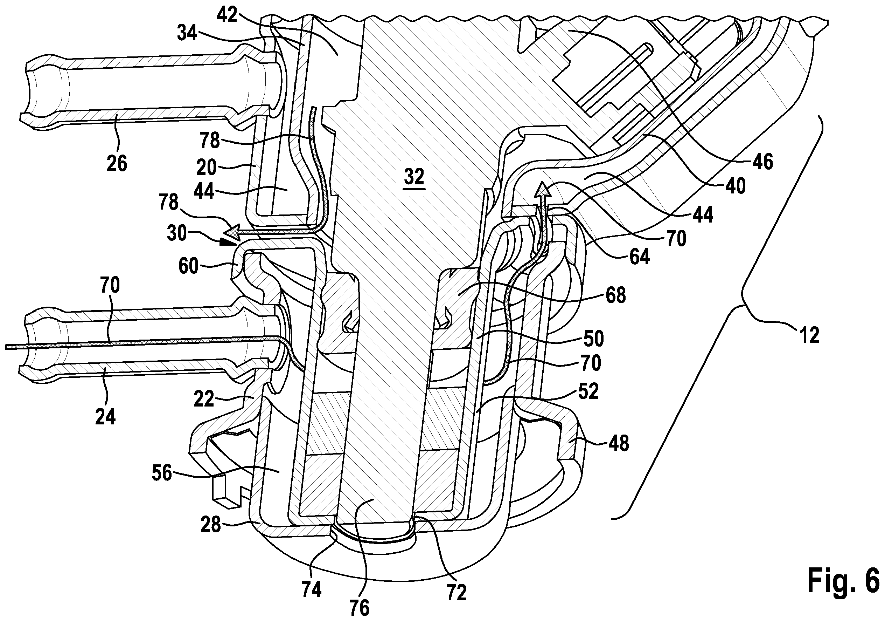

Figur 6 ist der Verlauf des Kühlfluidstromes durch die einzelnen Bereiche eines Dosiermoduls zu entnehmen, das von einer Einhausung umgeben ist. Wie Figur 6 zeigt, ist das Dosiermodul bzw. das darin angeordnete Dosierventil 32 von einer Einhausung 12 umgeben, so dass sämtliche temperaturempfindlichen Bereiche des Dosiermoduls 10 wirksam gekühlt werden können.

Aus der Darstellung gemäß Figur 6 geht hervor, dass ein Kühlfluidstrom 70 durch den mindestens einen, seitlich am verdrehbaren Flansch 22 ausgebildeten Kühlfluidzulauf 24 in den Hohlraum 56 des Innenteiles 28 einströmt. Der Hohlraum 56 des Innenteiles 28 ist einerseits durch eben jenes Innenteil 28 und andererseits durch die Mantelfläche des topfförmigen Einsatzes 50 begrenzt, an dessen oberen Ende sich der bereits mehrfach erwähnte ringförmig ausgebildete Kragen 60 befindet. Durch den über den mindestens einen Kühlfluidzulauf 24 strömt das Kühlfluid als Kühlfluidstrom 70 in den Hohlraum 56 ein. Dadurch kann erreicht werden, dass die hohen thermischen Belastungen ausgesetzte Ventilspitze 76 des Dosierventils 32 optimal gekühlt werden kann, da das Kühlfluid an dem mindestens einen Kühlfluidzulauf 24 mit der relativ kältesten Reparatur in das Dosiermodul 10 eintritt. Nach Befüllen des Hohlraumes 56 strömt das Kühlfluid über die mindestens eine Übergabeöffnung 64 in den oberen Teil des Dosiermoduls 10 über. Das Kühlfluid strömt in den Hohlraum 44 ein, so dass die Trennwand 40 im Bereich des elektrischen Steckkontaktes 46 wirksam gekühlt wird und andererseits die gekühlte Fläche 34, die den Innenraum 42 teilweise begrenzt, ebenfalls gekühlt werden kann. Vom Hohlraum 44 aus strömt das erwärmte Kühlfluid nunmehr über den mindestens einen Kühlfluidablauf 26 in den Kühlfluidkreislauf zurück, bei dem es sich entweder um den Kühlfluidkreislauf der Verbrennungskraftmaschine oder auch um einen separaten Kühlfluidkreislauf handeln kann.

Aus der perspektivischen Schnittdarstellung gemäß Figur 6 lässt sich entnehmen, dass Flüssigkeiten aus dem Innenraum 42 zwischen der Außenfläche des Dosierventils 32 und der Innenseite der gekühlten Fläche 34 in Abtransportrichtung 78 über die im ringförmig ausgebildeten Kragen 60 ausgebildeten Drainageöffnungen 30 gemäß des eingezeichneten Pfeiles abtransportiert werden. Aufgrund der Schwerkraftwirkung werden die Flüssigkeiten oder die Flüssigkeit aus dem Innenraum 42 in vertikale Richtung nach unten transportiert und gelangen oberhalb des Stützringes 68 in radiale Richtung seitlich nach außen über die Drainageöffnungen 30, die in entsprechender Anzahl in der Planfläche des ringförmig ausgebildeten Kragens 60 ausgebildet sind, in radiale Richtung nach außen. Somit kann eine Sumpfbildung im Inneren des Dosiermoduls 10 vermieden werden, insbesondere ist dem Auftreten von Korrosion wirksam entgegengetreten.

Im unteren Bereich des Dosiermoduls 10 ist zu erkennen, dass die verjüngt ausgebildete Ventilspitze 76 des Dosierventils 32 durch eine erste Öffnung 72 ragt, die in topfförmigen Einsatz 50 ausgebildet ist. Des Weiteren ist im Innenteil 28 eine zweite Öffnung 74 ausgebildet, entlang der der in Figur 6 nicht dargestellte Abgasstrom entlang streicht. Mithin ist die Ventilspitze 76 nicht direkt dem Abgasstrom ausgesetzt, der abhängig von der Betriebstemperatur der Verbrennungskraftmaschine Temperaturen im Bereich zwischen 200°C und 750°C aufweisen kann.

Wie Figur 6 zeigt, ist die Ventilspitze 76 vielmehr innenliegend angeordnet und ragt nicht direkt in den Abgasstrom der Verbrennungskraftmaschine hinein.

## Patentansprüche

1. Dosiermodul (10), insbesondere zum Eindosieren eines Betriebs-/ Hilfsstoffes, wie zum Beispiel eines Reduktionsmittels in den Abgastrakt einer Verbrennungsmaschine,
umfassend ein Dosierventil (32),
welches von einer gekühlten Fläche (34) umschlossen ist,
wobei mindestens die Fläche (34) von einem Kühlkörper (18, 20, 22) umschlossen ist, der von dem Kühlfluid durchströmt ist, **dadurch gekennzeichnet, dass** der Kühlkörper (18, 20, 22) mehrteilig ausgebildet ist und Drainageöffnungen (30) zum Abtransport (78) von Flüssigkeiten vorgesehen sind,
und dass der Kühlkörper (18, 20, 22) einen verdrehbaren Flansch (22) umfasst.

2. Dosiermodul (10) gemäß Anspruch 1, **dadurch gekennzeichnet, dass** die Drainageöffnungen (30) am Umfang des Dosiermodules (10) in einer 120°-Teilung (58) oder in einer 90°-Teilung (66) angeordnet sind.

3. Dosiermodul (10) gemäß Anspruch 1, **dadurch gekennzeichnet, dass** die Drainageöffnungen (30) in einem ringförmig ausgebildeten Kragen (60) verlaufen.

4. Dosiermodul (10) gemäß dem vorhergehenden Anspruch, **dadurch gekennzeichnet, dass** sich der ringförmig ausgebildete Kragen (60) unterhalb einer Mittelschale (20), die Teil des mehrteiligen Kühlkörpers (18, 20,22) ist, befindet.

5. Dosiermodul (10) gemäß einem der Ansprüche 3 oder 4, **dadurch gekennzeichnet, dass** die Drainageöffnungen (30) als rinnenförmige Vertiefungen ausgebildet sind.

6. Dosiermodul (10) gemäß Anspruch 5, **dadurch gekennzeichnet, dass** die als rinnenförmige Vertiefungen ausgebildeten Drainageöffnungen (30) in den ringförmig ausgebildeten Kragen (60) eingeprägt sind.

7. Dosiermodul (10) gemäß Anspruch 5, **dadurch gekennzeichnet, dass** die die Drainageöffnungen (30) darstellenden rinnenförmige Vertiefungen spanabhebend in dem ringförmig ausgebildeten Kragen (60) ausgeführt sind.

8. Dosiermodul (10) gemäß einem der Ansprüche 3 bis 7, **dadurch gekennzeichnet, dass** die Drainageöffnungen (30) in dem ringförmig ausgebildeten Kragen (60) ein radiales Gefälle von innen nach außen aufweisen.

9. Dosiermodul (10) gemäß einem der Ansprüche 3 bis 8, **dadurch gekennzeichnet, dass** ein von der gekühlten Fläche (34) und von dem Dosierventil (32) begrenzter Innenraum (42) sich oberhalb der Drainageöffnungen (30), die im ringförmig ausgebildeten Kragen (60) verlaufen, öffnet.

10. Dosiermodul (10) gemäß Anspruch 9, **dadurch gekennzeichnet, dass** ein Abtransport (78) von Flüssigkeit aus dem Innenraum (42) zwischen der gekühlten Fläche (34) und dem Dosierventil (32) über die Drainageöffnungen (30) in radiale Richtung nach außen erfolgt.

11. Dosiermodul (10) gemäß einem der vorhergehenden Ansprüche, **dadurch gekennzeichnet, dass** ein Hohlraum (56), der von einem Innenteil (28) und einem topfförmigen Einsatz (50) begrenzt ist, über mindestens eine Übergabeöffnung (64) mit einem Hohlraum (44) einer Mittelschale (20) hydraulisch verbunden ist.

12. Dosiermodul (10) gemäß Anspruch 11, **dadurch gekennzeichnet, dass** das in den Hohlraum (44) der Mittelschale (20) eintretende Kühlfluid die gekühlte Fläche (34) und eine Trennwand (40), die an einen elektrischen Steckkontakt (46) angrenzt, kühlt.

13. Dosiermodul (10) gemäß einem der Ansprüche 9 oder 10, **dadurch gekennzeichnet, dass** die Drainageöffnungen (30) zum Abtransport (78) von Flüssigkeiten vorgesehen sind, so dass durch Abtransport (78) der Flüssigkeit, insbesondere Kondensat aus dem Innenraum (42) Korrosion vermieden wird.

14. Verwendung des Dosiermoduls (10) gemäß einem oder mehrerer der vorhergehenden Ansprüche zum Einbringen eines Reduktionsmittels in den Abgastrakt einer Verbrennungskraftmaschine eines Lkws oder eines Pkws.

15. Verwendung des Dosiermoduls (10) gemäß einem der Ansprüche 1 bis 13, wobei als Kühlfluid das Kühlfluid im Kühlkreislauf einer Verbrennungskraftmaschine eines Fahrzeugs eingesetzt wird.

## Claims

1. Dosing module (10), in particular for dosing an operating/auxiliary medium, such as for example a reducing agent, into the exhaust tract of an internal combustion engine,
comprising a dosing valve (32),
which is surrounded by a cooled surface (34),
wherein at least the surface (34) is surrounded by a cooling body (18, 20, 22) through which the cooling fluid flows, **characterized in that** the cooling body (18, 20, 22) is of multi-part form, and drainage openings (30) for the discharge (78) of liquids are provided,
and **in that** the cooling body (18, 20, 22) comprises a rotatable flange (22).

2. Dosing module (10) according to Claim 1, **characterized in that** the drainage openings (30) are arranged on the circumference of the dosing module (10) with a 120° pitch (58) or with a 90° pitch (66).

3. Dosing module (10) according to Claim 1, **characterized in that** the drainage openings (30) run in a collar (60) of ring-shaped form.

4. Dosing module (10) according to the preceding claim, **characterized in that** the collar (60) of ring-shaped form is situated below a central shell (20) which is part of the multi-part cooling body (18, 20, 22).

5. Dosing module (10) according to either of Claims 3 and 4, **characterized in that** the drainage openings (30) are in the form of channel-like depressions.

6. Dosing module (10) according to Claim 5, **characterized in that** the drainage openings (30) in the form of channel-like depressions are stamped into the collar (60) of ring-shaped form.

7. Dosing module (10) according to Claim 5, **characterized in that** the channel-like depressions which constitute the drainage openings (30) are formed in the collar (60) of ring-shaped form by way of a chip-removing process.

8. Dosing module (10) according to one of Claims 3 to 7, **characterized in that** the drainage openings (30) in the collar (60) of ring-shaped form have a radial gradient from inside to outside.

9. Dosing module (10) according to one of Claims 3 to 8, **characterized in that** an interior space (42) which is delimited by the cooled surface (34) and by the dosing valve (32) opens above the drainage openings (30) which run in the collar (60) of ring-shaped form.

10. Dosing module (10) according to Claim 9, **characterized in that** a discharge (78) of liquid from the interior space (42) between the cooled surface (34) and the dosing valve (32) takes place in a radial direction toward the outside via the drainage openings (30).

11. Dosing module (10) according to one of the preceding claims, **characterized in that** a cavity (56) which is delimited by an inner part (28) and by a pot-shaped insert (50) is hydraulically connected via at least one transfer opening (64) to a cavity (44) of a central shell (20).

12. Dosing module (10) according to Claim 11, **characterized in that** the cooling fluid entering the cavity (44) of the central shell (20) cools the cooled surface (34) and a partition (40) which adjoins an electrical plug contact (46).

13. Dosing module (10) according to either of Claims 9 and 10, **characterized in that** the drainage openings (30) are provided for the discharge (78) of liquids, such that corrosion is prevented as a result of the discharge (78) of the liquid, in particular condensate, from the interior space (42).

14. Use of the dosing module (10) according to one or more of the preceding claims for introducing a reducing agent into the exhaust tract of an internal combustion engine of a heavy goods motor vehicle or of a passenger motor vehicle.

15. Use of the dosing module (10) according to one of Claims 1 to 13, wherein the cooling fluid in the cooling circuit of an internal combustion engine of a vehicle is used as cooling fluid.

## Revendications

1. Module de dosage (10), en particulier pour le dosage d'un carburant/additif, comme par exemple un agent réducteur dans la ligne des gaz d'échappement d'un moteur à combustion interne, comprenant une soupape de dosage (32), qui est entourée par une surface refroidie (34), dans lequel au moins la surface (34) est entourée par un corps de refroidissement (18, 20, 22), qui est parcouru par le fluide de refroidissement, **caractérisé en ce que** le corps de refroidissement (18, 20, 22) est réalisé en plusieurs parties et il est prévu des ouvertures de drainage (30) pour l'évacuation (78) de liquides, et **en ce que** le corps de refroidissement (18, 20, 22) comprend une virole tournante (22).

2. Module de dosage (10) selon la revendication 1, **caractérisé en ce que** les ouvertures de drainage (30) sont disposées sur la périphérie du module de dosage (10) avec un pas de 120° (58) ou avec un pas de 90° (66).

3. Module de dosage (10) selon la revendication 1, **caractérisé en ce que** les ouvertures de drainage (30) se trouvent dans un rebord de forme annulaire (60).

4. Module de dosage (10) selon l'une quelconque des revendications précédentes, **caractérisé en ce que** le rebord de forme annulaire (60) se trouve en dessous d'une coque moyenne (20), qui fait partie du corps de refroidissement en plusieurs parties (18, 20, 22).

5. Module de dosage (10) selon l'une des revendications 3 ou 4, **caractérisé en ce que** les ouvertures de drainage (30) sont constituées par des creux en forme de chenaux.

6. Module de dosage (10) selon la revendication 5, **caractérisé en ce que** les ouvertures de drainage (30) constituées par des creux en forme de chenaux sont pratiquées dans le rebord de forme annulaire (60).

7. Module de dosage (10) selon la revendication 5, **caractérisé en ce que** les creux en forme de chenaux représentant les ouvertures de drainage (30) sont réalisés par enlèvement de copeaux dans le rebord de forme annulaire (60).

8. Module de dosage (10) selon l'une quelconque des revendications 3 à 7, **caractérisé en ce que** les ouvertures de drainage (30) présentent dans le rebord de forme annulaire (60) une pente radiale descendante de l'intérieur vers l'extérieur.

9. Module de dosage (10) selon l'une quelconque des revendications 3 à 8, **caractérisé en ce qu'**une chambre intérieure (42) limitée par la surface refroidie (34) et par la soupape de dosage (32) s'ouvre au-dessus des ouvertures de drainage (30), qui se trouvent dans le rebord de forme annulaire (60).

10. Module de dosage (10) selon la revendication 9, **caractérisé en ce qu'**il se produit une évacuation (78) de liquide hors de la chambre intérieure (42) entre la surface refroidie (34) et la soupape de dosage (32) en direction radiale vers l'extérieur par les ouvertures de drainage (30).

11. Module de dosage (10) selon l'une quelconque des revendications précédentes, **caractérisé en ce qu'**une cavité (56), qui est limitée par une partie intérieure (28) et un insert en forme de godet (50), est reliée hydrauliquement à une cavité (44) de la coque moyenne (20) par au moins une ouverture de transmission (64).

12. Module de dosage (10) selon la revendication 11, **caractérisé en ce que** le fluide de refroidissement pénétrant dans la cavité (44) de la coque moyenne (20) refroidit la surface refroidie (34) et une paroi de séparation (40), qui jouxte un contact électrique à fiche (46).

13. Module de dosage (10) selon l'une des revendications 9 ou 10, **caractérisé en ce que** les ouvertures de drainage (30) sont prévues pour l'évacuation (78) de liquides, de telle manière que la corrosion soit évitée par l'évacuation (78) du liquide, en particulier du condensat hors de la chambre intérieure (42).

14. Utilisation du module de dosage (10) selon une ou plusieurs des revendications précédentes pour l'introduction d'un agent réducteur dans la ligne des gaz d'échappement d'un moteur à combustion interne d'un camion ou d'une voiture automobile.

15. Utilisation du module de refroidissement (10) selon l'une quelconque des revendications 1 à 13, dans lequel on utilise comme fluide de refroidissement le fluide de refroidissement présent dans le circuit de refroidissement d'un moteur à combustion interne d'un véhicule.
